# EUROPEAN PATENT APPLICATION

(11) **EP 2 495 684 A2**
(43) Date of publication of application: **05.09.2012**
(21) Application number: 12157551.8
(22) Date of filing: 29.02.2012
(51) Int. Cl.: G06K 7/10, G06K 7/14

(54) **Digital linear imaging system employing pixel processing techniques to composite single-column linear images on a 2d image detection array**

(30) Priority: 01.03.2011 US 201113037530
(71) Applicant: Metrologic Instruments, Inc., Blackwood, NJ 08012 (US)
(72) Inventor: Good, Timothy, Morristown, NJ New Jersey 07962-2245 (US); Xian, Tao, Morristown, NJ New Jersey 07962-2245 (US); Zhu, Xiaoxun, Morristown, NJ New Jersey 07962-2245 (US); Wang, Yunjiun Paul, Morristown, NJ New Jersey 07962-2245 (US)
(74) Representative: Buckley, Guy Julian

(57) **Abstract**

A digital-imaging based code symbol reading system includes a planar laser illumination and imaging module (PLIIM) employing a 2-D image detection array to capture narrow-area 2D digital images, and then automatically processes the pixels of the narrow-area 2D digital images so as to generate composite single-column 1D digital images for decode processing. The system employs a method of capturing and processing narrow-area 2D digital images using semi-redundant sampling based pixel processing techniques, to composite single-column linear images on a 2D image detection array.

## Description

### BACKGROUND

### Field of Disclosure

The present disclosure relates generally to improvements in methods of and apparatus for reading code symbols on objects using planar or narrow illumination beams and 2D digital imaging and processing techniques.

### Brief Description of the State of Knowledge in the Art

Linear imaging bar code readers typically employ a 1-D image sensor having a single, long row of pixels. Usually a source of illumination is required to illuminate bar-coded objects in order to gain enough signal contrast in the image.

US Patent Nos. 6,997,386 and 7,014,455 disclose the use of LEDs as a source of illumination during imaging operations. However, when using LEDs, it is difficult to efficiently concentrate LED-based illumination onto the very narrow region of interest (ROI), especially in the far field of illumination.

US Patent Nos. 6,997,386 and 7,014,455 also disclose the use of laser diodes to generate planar laser illumination beams (PLIBs) having highly focused beam characteristics. However, the use of laser diodes to generate PLIBs typically involves increased costs relating to (i) achieving sensitive alignment between the laser beam and the linear image sensor array, and (ii) reducing speckle-pattern noise caused by the coherent nature of the laser light beam, in rugged production environments.

US Patent No. 7,546,952 discloses the use of an optical multiplexor (OMUX), combined with high frequency modulation (HFM), to solve the problem of speckle-pattern noise through the superposition of multiple incoherent replications of the laser beam. However, this solution increases the challenge of physically aligning planar laser illumination beams (PLIBs) and linear image sensors in demanding production environments. Consequently, deployment of PLIIM-based systems as taught in US Patent No. 7,546,952 has been expensive.

Thus, there is still a great need in the art for improved methods of and apparatus for reading code symbols on objects using planar illumination beams and digital imaging techniques, while avoiding the shortcomings and drawbacks of prior art systems and methodologies.

### OBJECTS AND SUMMARY

Accordingly, a primary object of the present disclosure is to provide improved reading code symbols on objects using planar illumination beams and digital imaging techniques, which are free of the shortcomings and drawbacks of prior art systems and methodologies.

Another object is provide such an apparatus in the form of a digital-imaging based code symbol reader using a 2D digital image detection array to detect a linear digital image of an object in the field of view (FOV) of the 2D digital image detection array, while being illuminated by a planar illumination beam (PLIB).

Another object is to provide such a digital-imaging based code symbol reading system, wherein the 2D digital image detection array is realized using an off-the-shelf 2D image detector/sensor, wherein a narrow central region of the image pixels is used to collect image data that has been modulated onto the planar illumination beam (PLIB), while a majority of pixels outside the narrow central region are unused during imaging.

Another object is to provide such a digital-imaging based code symbol reading system, wherein the PLIB does not need to be tightly focused on a single row or column pixels in a linear image detecting array, thereby relaxing the alignment difficulty, while ensuring that all of the energy associated with the data modulated onto the PLIB is detected by the 2D image detection array.

Another object is to provide such a digital-imaging based code symbol reading system, wherein a digital image processor digitally adds pixel rows of image data to generate a linear (1D) digital image, thereby averaging out speckle-type noise to increase the signal to noise ratio (SNR) at the image detection array, while releasing the requirement on multiple degree-of freedom alignment of an input laser beam with an optical multiplexing (OMUX) device.

Another object is to provide a method of despeckling images formed by laser illumination, and improving the alignment of laser beam with the narrow field of view (FOV) of the image sensor.

Another object is to provide an improved method of capturing digital linear images using semi-redundant sampling (i.e. super-sampling) based pixel processing techniques, used to composite a single-column linear image on a 2D image detection array.

Another object is to provide an improved method of processing (i.e. algorithm), for both laser and LED illumination systems alike.

Another object is to provide a digital-imaging based code symbol reading system that does not require that perfect superimposition of multiple laser beams during the production of a planar laser illumination beam (PLIB) used to illuminate objects while being imaged within the field of view (FOV) of a 2D image detection array.

Another object is to provide a planar illumination and imaging module (PLIIM) comprising a planar illumination array for producing a planar illumination beam (PLIB), a 2-D image detection array for detecting narrow-area digital images formed using the PLIB, and a pixel processor for processing the pixels of the narrow-area 2D digital images so as to generate composite single-column 1D digital images, for decode processing.

These and other objects will become apparent hereinafter and in the Claims appended hereto.

### BRIEF DESCRIPTION OF THE DRAWINGS

In order to more fully understand the Objects of the Present Invention, the following Detailed Description of the Illustrative Embodiments should be read in conjunction with the accompanying Figure Drawings in which:
Fig. 1 is a perspective view of a retail point of sale (POS) station employing a first illustrative digital-imaging embodiment of the bar code symbol reading system of the present disclosure, shown integrated with an electronic weight scale, an RFID reader and magnet-stripe card reader, and having a thin, tablet-like form factor for compact mounting in the countertop surface of the POS station, and employing a plurality of coplanar illumination and imaging stations supporting omni-directional imaging of code symbols transported through its 3D imaging volume;
Fig. 2 is a first perspective view of the digital-imaging bar code symbol reading system shown removed from its POS environment in Fig. 1, and provided with an imaging window protection plate (mounted over a glass light transmission window) and having a central X aperture pattern and a pair of parallel apertures aligned parallel to the sides of the system, for the projection of coplanar illumination and imaging planes from a complex of illumination and imaging stations mounted beneath the imaging window of the system;
Fig. 3A is a second perspective view of the digital-imaging bar code symbol reading system, shown installed in the retail POS environment of Fig. 1, wherein each illuminating and linear imaging station employs a linear array of VLDs or LEDs to generate a substantially planar illumination beam (PLIB) which is spatially-overlapped by the field of view of the 2D image detection array employed in the station;
Fig. 3B is a block schematic representation of the system embodiment of Fig. 3A, wherein a complex of illuminating and linear imaging stations support automatic image formation and capture along each illumination and imaging plane within the 3D imaging volume;
Fig. 3C is a block schematic representation of one of the illumination and imaging stations employed in the system embodiment of Fig. 3B, showing its planar illumination array (PLIA), its linear image formation and detection subsystem, image capturing and buffering subsystem, high-speed imaging based object motion/velocity detecting (i.e. sensing) subsystem, and local control subsystem;
Fig. 3D is a first perspective view of the complex of illumination and imaging stations and FOV folding mirrors, employed in the system shown in Figs. 3A and 3B;
Fig. 3E is a second perspective view of the complex of illumination and imaging stations and FOV folding mirrors, employed in the system shown in Figs. 3A and 3B, showing a single planar illumination and imaging plane (PLIB/FOV) projected from a particular illumination and imaging station;
Fig. 3F is a perspective view of one of the illumination and imaging stations, comprising a planar laser-based or LED-based illumination and imaging module (PLIIM), arranged in combination with its PLIB/FOV folding mirror;
Fig. 3G is a perspective view of a laser-based planar illumination and imaging module (PLIIM) shown in Fig. 3F, employing high-frequency modulation (HFM) circuitry and current driver circuitry on flexible circuits used to drive the VLDs employed in the PLIIM;
Fig. 3H is an exploded view of the planar laser illumination and imaging module (PLIIM) shown in Fig. 3G;
Fig. 3I is a perspective view of the planar laser illumination and imaging module (PLIIM) of Fig. 3G, showing the spatially-overlapping FOV and planar laser illumination beam (PLIB) components exiting from the module;
Fig. 3J is an elevated front view of the planar laser illumination and imaging module (PLIIM) of Fig. 3I;
Fig. 4 is a perspective view of a 2D image detection array employed in the PLIIM shown in Fig. 3F, supporting either planar laser-based and/or LED-based illumination;
Fig. 5 is a flow chart setting forth the major steps of an illustrative embodiment of the digital image pixel processing method supported by the 2D digital image detection array shown in FIG. 3K and the image capturing and buffering subsystem shown in Fig. 3C;
Fig. 6 is a schematic diagram describing an exemplary embodiment of a computing and memory architecture platform for implementing the digital image capture and processing system described in Figs. 3A, 3B and 3C;

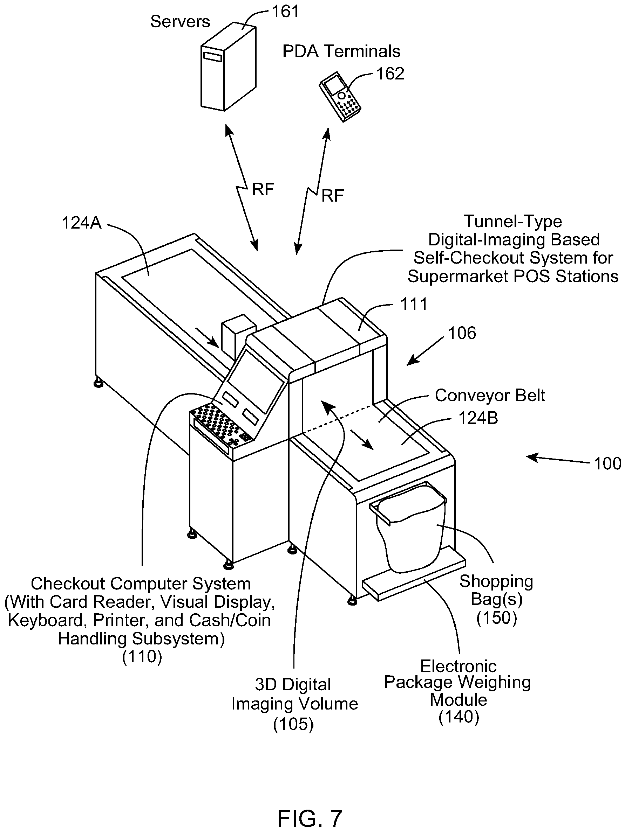

Fig. 7 is a first perspective view of a second illustrative embodiment of the digital image processing system of the present disclosure, realized in the form of a tunnel-type omni-directional digital imaging system, installed about a split-type conveyor belt countertop surface provided at a self-checkout or cashier-assisted station in a retail store environment, employing a plurality of coplanar illumination and imaging subsystems providing the system with the digital image processing capacity of reading bar code symbols on any of six or more sides of packages transported on its conveyor belt, and arranged in either a singulated or non-singulated manner;
Fig. 8A is a first perspective view of the tunnel-type digital imaging system illustrated in Fig. 7, shown with its outer tunnel housing structure (i.e. shell) removed to reveal, in greater detail, its side-located dual-FOV PLIIM-based digital imaging panels (DIPs), and its upper single dual-FOV PLIIM-based DIP, arranged about the conveyor belt structure, and supporting a 3D digital imaging volume above the conveyor belt within the tunnel structure;
Fig. 8B is a second perspective view of the tunnel-type digital imaging system illustrated in Fig. 7, shown with its outer tunnel housing structure removed to reveal, in greater detail, its side-located dual-FOV PLIIM-based DIPs, and its upper single dual-FOV PLIIM-based DIP, arranged about the conveyor belt structure, and supporting a 3D digital imaging volume above the conveyor belt within the tunnel structure;
Fig. 9 is a perspective view of the tunnel-type digital imaging system of the present disclosure illustrated in Figs. 8A and 8B, shown with its upper PLIIM-based DIP removed to reveal, in greater detail, the complex of spatially-overlapping PLIB/FOVs generated within the 3D digital imaging volume of the tunnel structure;
Fig. 10 is a perspective view of the upper PLIIM-based DIP shown generating a spatially-overlapping PLIB/FOV from its PLIIM, and a pair of AM-laser beams at the input and output ports, from its LADAR-based detection/profiling/dimensioning subsystems integrated within the upper DIP;
Figs. 11A and 11B, taken together, set forth a block schematic representation of the tunnel-type digital imaging system of Figs. 7 through 9, wherein the complex of illuminating and linear imaging subsystems, constructed using either VLD-based illumination arrays or area-type (2D) image sensing arrays, and contained within DIPs as described above, support automatic image formation and capture along each illumination and imaging plane therewithin;

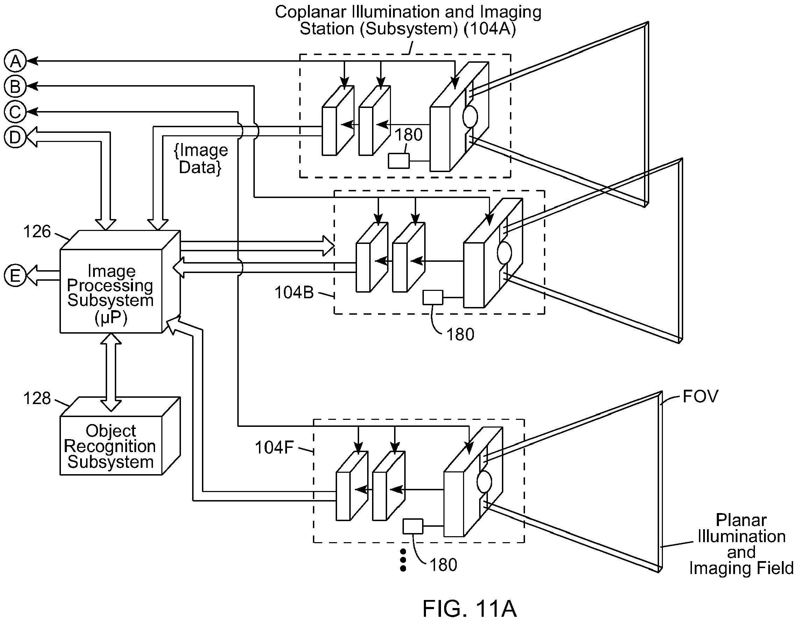

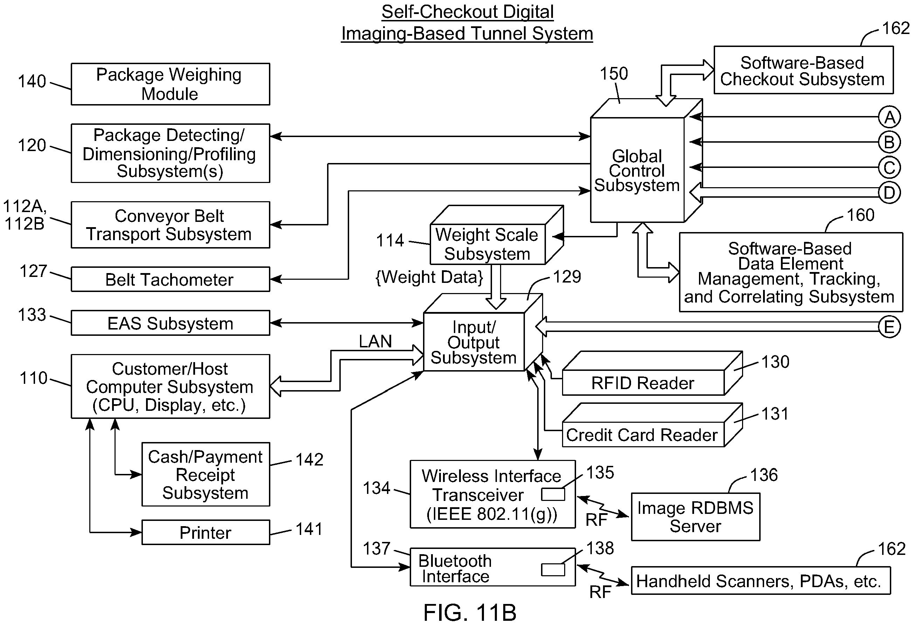

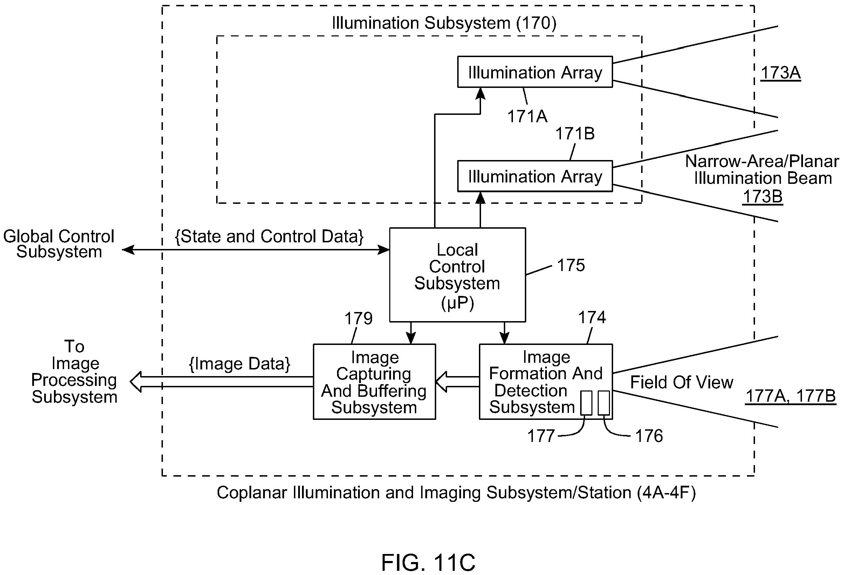

Fig. 11C is a block schematic representation of an illustrative embodiment of a illumination and imaging subsystem that can be employed in the tunnel systems depicted in Fig. 11A and 11B, showing its planar light illumination array (PLIA), its linear image formation and detection subsystem, its image capturing and buffering subsystem, and its local control subsystem (i.e. microcontroller) which receives object velocity data from either a conveyor belt tachometer or other data source, and generates control data for optimally controlling the planar illumination arrays and/or the clock frequency in the linear image sensing array within the image formation and detection subsystem;
Fig. 12 is a perspective view of a 2D image sensing array employed in the PLIIM-based digital imaging panels (DIPs) shown in Figs. 8A and 8B;
Fig. 13 is a flow chart setting forth the major steps of the illustrative embodiment of the digital image processing method supported by the 2D digital image detection array shown in Fig. 12;
Fig. 14A is a perspective view of a hand-supportable planar laser illumination and imaging module (PLIIM) based digital image capture and processing system, according to an illustrative embodiment showing the projection of its planar laser illumination beam (PLIB) along its field of view (FOV), i.e. PLIB/FOV, for the purpose of digitally imaging a code symbol in the field of view, processing the same and transmitting generated symbol character data over a data communication link, to a remotely situated host computer system;
Fig. 14B is a perspective partially-cutaway view of the hand-supportable PLIIM-based digital image capture and processing system of Fig. 14A, showing the projection of a composite PLIB/FOV from the light transmission window of the housing;
Fig. 15 is a perspective view of the planar laser illumination and imaging module (PLIIM), mounted within the head portion of the hand-supportable PLIIM-based code digital image capture and processing system of Fig. 14A;
Fig. 15A is an exploded view of some primary components employed in the PLIIM, shown in Fig. 15;
Fig. 15B is a perspective view of the PLIIM of Fig. 15, showing the spatially-overlapping FOV and planar laser illumination beam (PLIB) components exiting from the PLIIM;
Fig. 15C is an elevated front view of the PLIIM of Fig. 15;
Fig. 16 is a perspective view of a 2D image detection array employed in the PLIIM in Figs. 15A and 15B;
Fig. 17 is a flow chart setting forth the major steps of the illustrative embodiment of the digital image processing method supported by the 2D digital image detection array shown in FIG. 16; and
Fig. 18 is a block schematic representation of the hand-supportable PLIIM-based code digital image capture and processing system of Figs. 14A and 14B, wherein a PLIIM-based illuminating and imaging subsystem, constructed using VLD and/or LED based illumination arrays and area-type (2D) image sensing arrays, is contained within a hand-supportable housing, and supporting digital image formation and capture along its coplanar illumination and imaging plane projected therefrom.

### DETAILED DESCRIPTION OF THE ILLUSTRATIVE EMBODIMENTS

Referring to the figures in the accompanying Drawings, the various illustrative embodiments of the apparatus and methodologies will be described in great detail, wherein like elements will be indicated using like reference numerals.

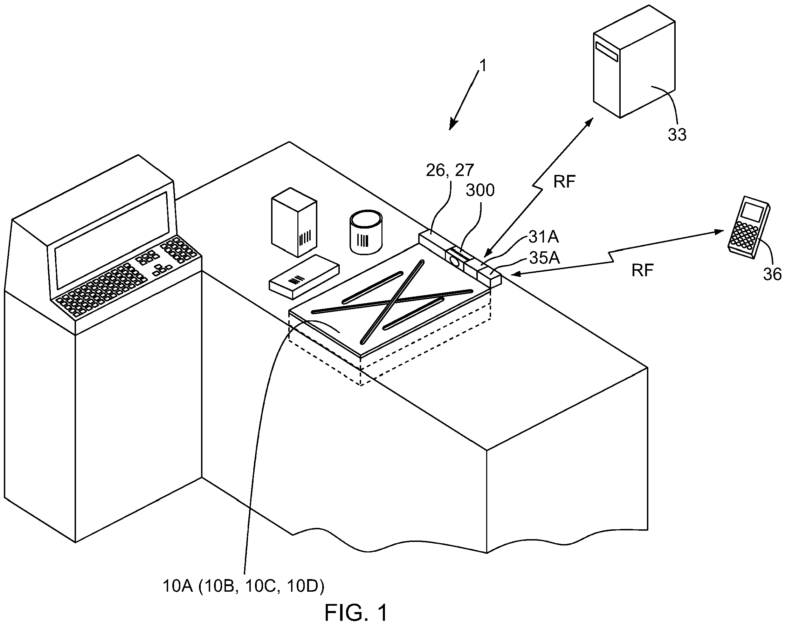

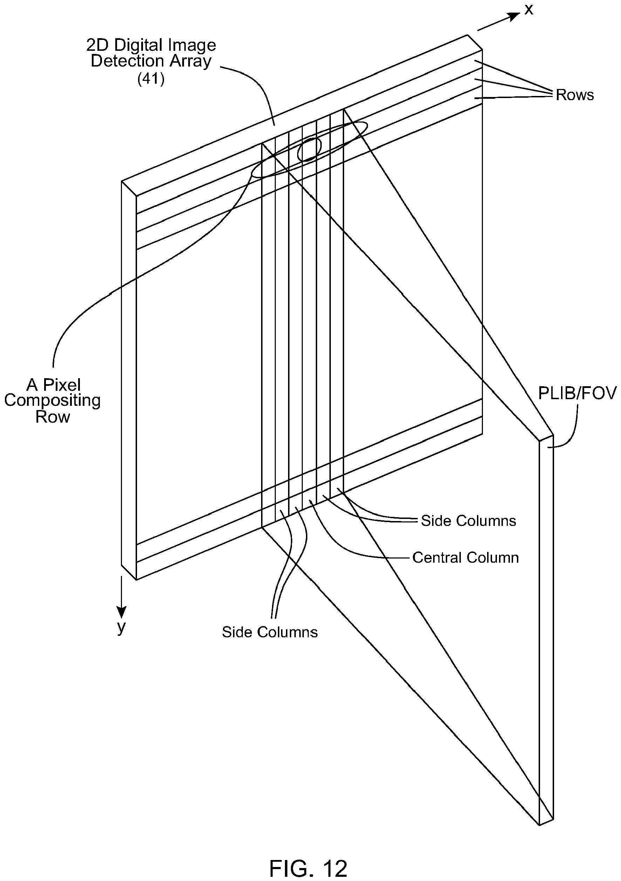

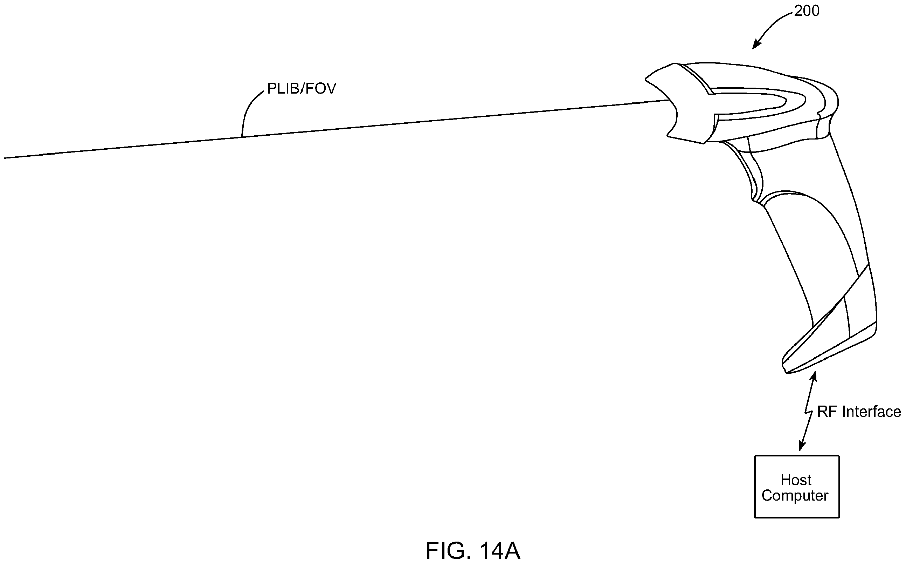

In particular, Figs. 1 through 3J show a first illustrative embodiment of a digital-imaging bar code symbol reading system 1 in the form of a POS-based system, whereas Figs. 7 through 12 show a second illustrative embodiment of the digital-imaging bar code symbol reading system 100 in the form of a tunnel-based system. In Figs. 14A through 18, the third illustrative embodiment of the digital-imaging bar code symbol reading system 100 is in the form of a hand-supportable digital imaging code symbol reading system.

In each illustrative embodiment, planar laser illumination and 2D imaging techniques can be used to significantly reduce speckle noise at a 2D image detection array, while the image capture and pixel processing techniques of the present disclosure significantly reduce alignment requirements between the planar laser illumination beam and the 2D image detection array.

Also, planar LED-illumination and 2D imaging techniques can be used to improve image capture performance at a 2D image detection array, by virtue of semi-redundant sampling (i.e. super-sampling) based pixel processing techniques, used to composite a single-column linear image on a 2D image detection array.

The details of these illustrative embodiments will now be described in detail.

### First Illustrative Embodiment Of The Bar Code Symbol Reading System

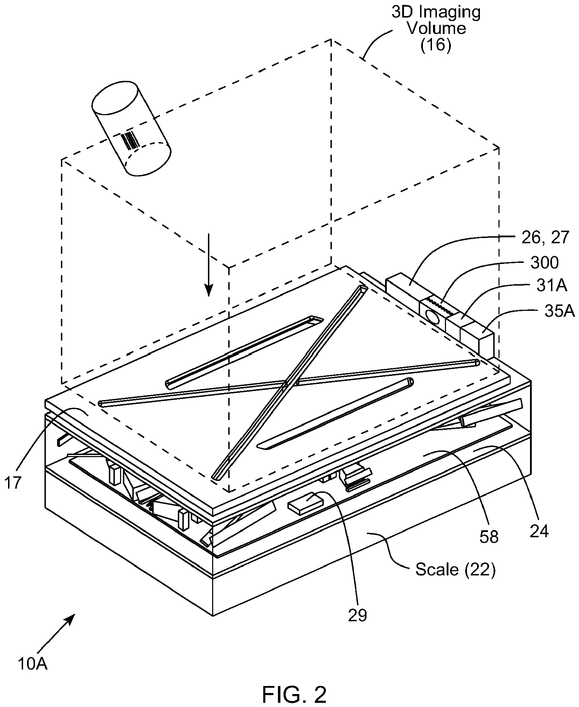

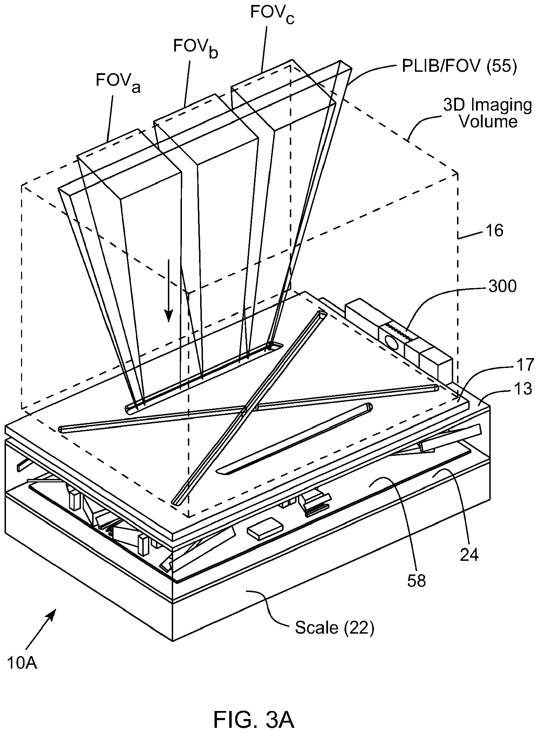

As shown in Figs. 2 and 3A, the bar code symbol reading system of the first illustrative embodiment 10A includes a system housing having an optically transparent (glass) imaging window 13, preferably covered by an imaging window protection plate 17 which is provided with a pattern of apertures 18. These apertures permit the projection of a plurality of coplanar illumination and imaging planes from the complex of laser illumination and imaging stations 15A through 15F.

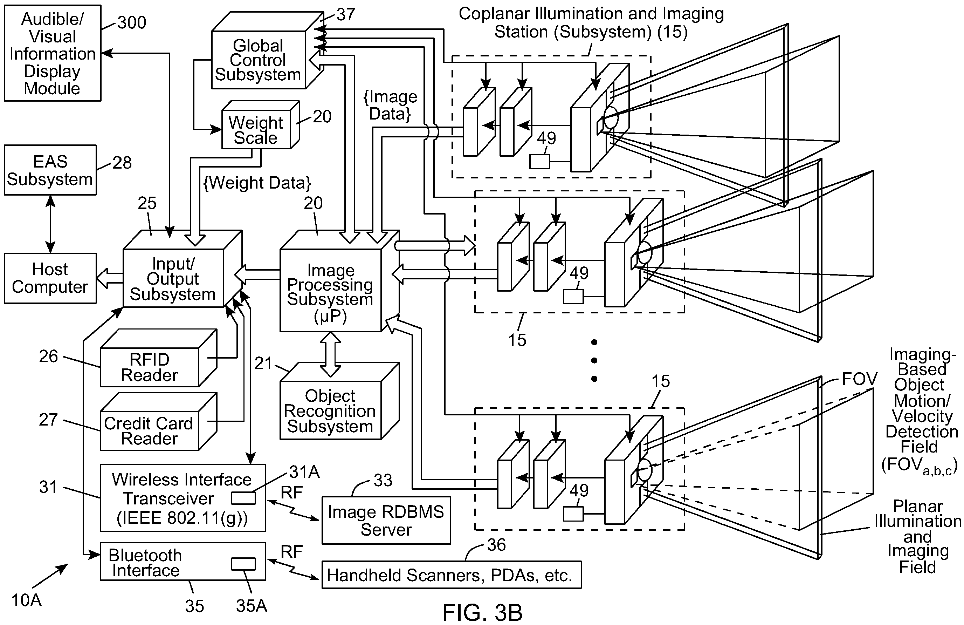

As shown in the system diagram of Fig. 3B, system 10 generally comprises: a complex of illuminating and linear imaging stations (15A through 15F), each station being constructed using linear VLD-based illumination arrays, and area-type (2D) image detection arrays and pixel processing technology of the present disclosure; a multi-processor multi-channel image processing subsystem 20 for supporting automatic image processing based bar code symbol reading and optical character recognition (OCR) along each coplanar illumination and imaging plane, and corresponding data channel within the system; a software-based object recognition subsystem 21, for use in cooperation with the image processing subsystem 20, and automatically recognizing objects (such as vegetables and fruit) at the retail POS while being imaged by the system; an electronic weight scale module 22 employing one or more load cells positioned centrally below the system's structurally rigid platform, for bearing and measuring substantially all of the weight of objects positioned on the window 13 or window protection plate 17, and generating electronic data representative of measured weight of such objects; an input/output subsystem 25 for interfacing with the image processing subsystem 20, the electronic weight scale 22, RFID reader 26, credit-card reader 27, Electronic Article Surveillance (EAS) Subsystem 28, including a Sensormatic® EAS tag deactivation block 29 integrated in system; and an audible/visual information display subsystem (i.e. module) 300 for visually and/or audibly displaying information relating to the operation of the system.

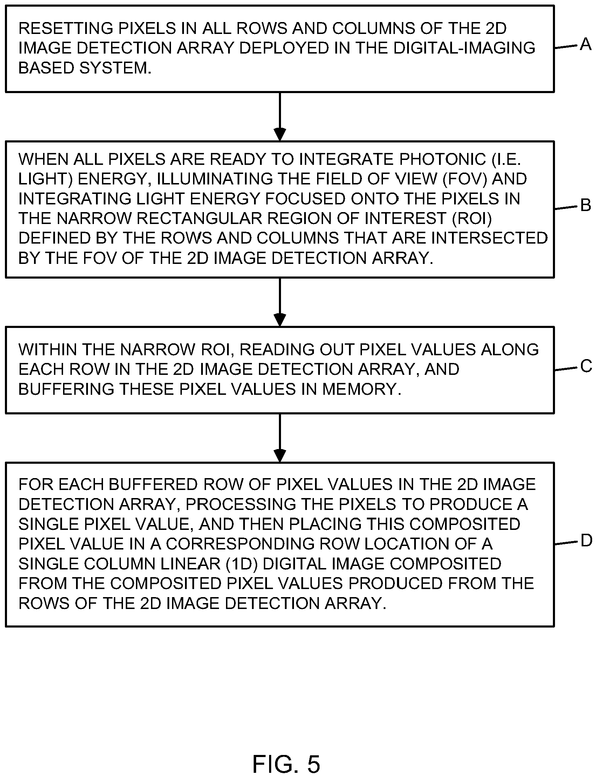

The primary function of each illumination and imaging station in the bar code symbol reading system 10A, indicated by reference numeral 15 is to capture narrow-area digital images along the field of view (FOV) of its coplanar illumination and imaging planes using laser illumination, depending on the system design. These captured narrow-area (2D) digital images are then buffered, and preprocessed to generate composited linear (1D) digital images using the semi-redundant pixel-sampling based processing method shown in Fig. 5. The linear digital images are then decode-processed using linear (1D) type image capturing and processing based bar code reading algorithms. Also, the complex of illuminating and imaging stations 15A through 15F can be constructed using (i) VLD-based illumination arrays and area-type (2D) image sensing arrays, and (ii) real-time object motion/velocity detection technology embedded within the system architecture. The resulting system 10 enables: (1) intelligent automatic illumination control within the 3D imaging volume of the system; (2) automatic image formation and capture along each coplanar illumination and imaging plane therewithin; and (3) real-time object detection to help control the illumination and imaging of objects as objects are moved through the 3D imaging volume.

In Fig. 3B, the bar code symbol reading module employed along each channel of the multi-channel image processing subsystem 20 can be realized using SwiftDecoder® Image Processing Based Bar Code Reading Software from Omniplanar Corporation, New Jersey, or any other suitable image processing based bar code reading software. Also, the system provides full support for (i) dynamically and adaptively controlling system control parameters in the digital image capture and processing system, as disclosed and taught in Applicants' US Patent Nos. 7,607,581 and 7,464,877 as well as (ii) permitting modification and/or extension of system features and function, as disclosed and taught in US Patent No. 7,708,205, each said patent being incorporated herein by reference.

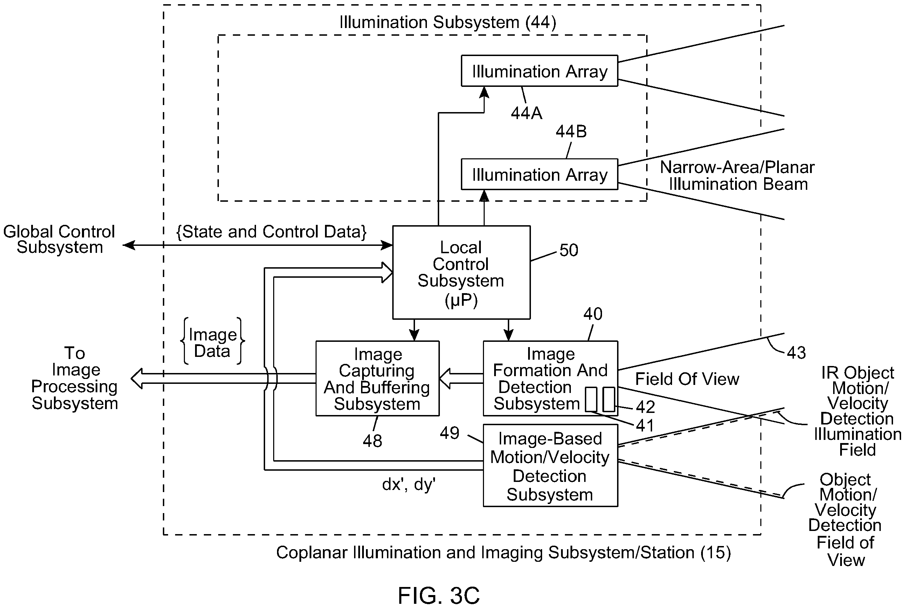

As shown in Figs. 3B and 3C, each coplanar illumination and imaging station 15 comprises: an illumination subsystem 44 including a linear array of VLDs 45 and associated focusing and cylindrical beam shaping optics (i.e. planar illumination arrays PLIAs), for generating a planar laser illumination beam (PLIB) 61 from the station; an image formation and detection (IFD) subsystem 40 having a camera controller interface (e.g. realized as a field programmable gate array or FPGA) for interfacing with the local control subsystem 50, and a high-resolution area-type (2D) image sensing array 41 with optics 42 providing a field of view (FOV) 43 on the 2D image sensing array 41 that spatially-overlaps the PLIB produced by the linear illumination array 45; a local control subsystem 50 for locally controlling the operation of subcomponents within the station, in response to control signals generated by global control subsystem 37 maintained at the system level, shown in Fig. 3B; an image capturing and buffering subsystem 48 for capturing narrow-area digital images with the 2D image sensing array 41, buffering these narrow area images in buffer memory, and processing these images as taught in Fig. 5, so as to form linear (1D) digital images, which can be subsequently buffered and combined to form 2D digital images for transfer to image-processing subsystem 20 maintained at the system level, as shown in Fig. 3B, and subsequent image processing according to bar code symbol decoding algorithms, OCR algorithms, and/or object recognition processes; a high-speed image capturing and processing based motion/velocity sensing subsystem 49 for motion and velocity data to the local control subsystem 50 for processing and automatic generation of control data that is used to control the illumination and exposure parameters of the linear image formation and detection system within the station. Details regarding the design and construction of planar illumination and imaging module (PLIIMs) can be found in Applicants' U.S. Patent No. 7,028,899 B2, incorporated herein by reference.

In the illustrative embodiment shown in Figs. 2 through 3C, each image capturing and processing based motion/velocity sensing subsystem 49 continuously and automatically computes the motion and velocity of objects passing through the planar FOV of the station, and uses this data to generate control signals that set the frequency of the clock signal used to read out data from the linear image sensing array 41 employed in the linear image formation and detection subsystem 40 of the system. The versions of the image capturing and processing based motion/velocity sensing subsystem 49 are schematically illustrated in US Patent No. 7,540,424 incorporated herein by reference.

As shown in Fig. 3A each subsystem 15 comprises: (a) a planar laser illumination array (PLIA) subsystem including (i) a first linear array of dynamically/adaptively driven VLD-based planar laser illumination modules (PLIMs), and (ii) a second planar laser illumination array (PLIA) having three dynamically/adaptively driven IRVD-based PLIMs, each operated under the control of a local control subsystem, in response to control data produced by the image processing subsystem running a spectral-mixture control algorithm disclosed in US Publication No. 20080283611A1; (b) an image formation and detection (IFD) subsystem having an area-type (2D) digital image detection array (having a narrow-area field of pixels actively driven), and (ii) optics for forming a field of view on the linear image detection array (or the narrow-area field of pixels on a 2D image detection array); (c) an image capture and buffering subsystem for capturing and buffering the narrow-area digital images formed and detected by the IPD subsystem; (d) a local control subsystem (e.g. programmed microprocessor) performing local control functions within the station including the generation of control data and signals for driving each of the PLIMs in each PLIA; and (e) a digital image processing subsystem for processing the narrow-area digital images captured and buffered by the subsystem and generating linear (1D) digital images, for subsequent buffering and processing to read code symbols graphically represented therein. Details relating to each PLIM is disclosed in U.S. Publication No. 20080283611A1, incorporated herein by reference.

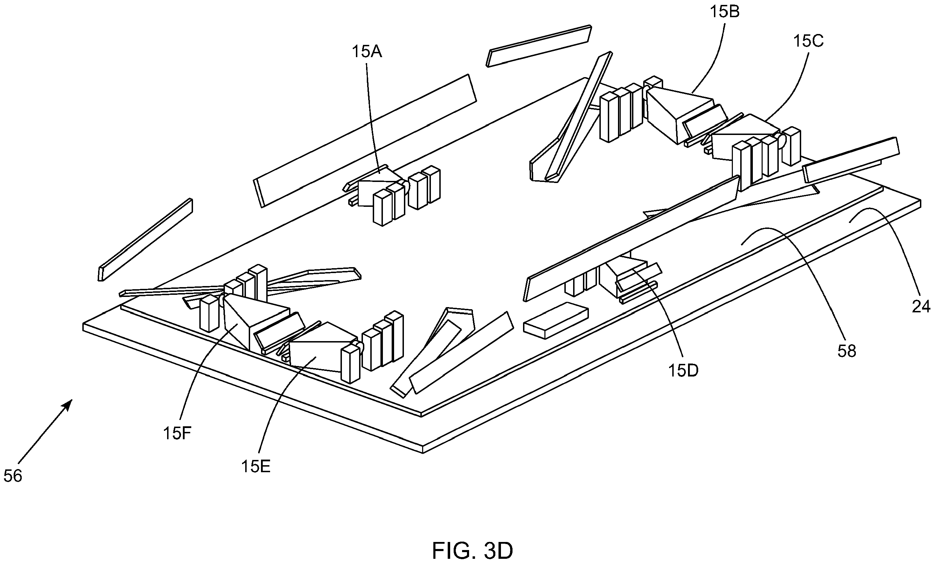

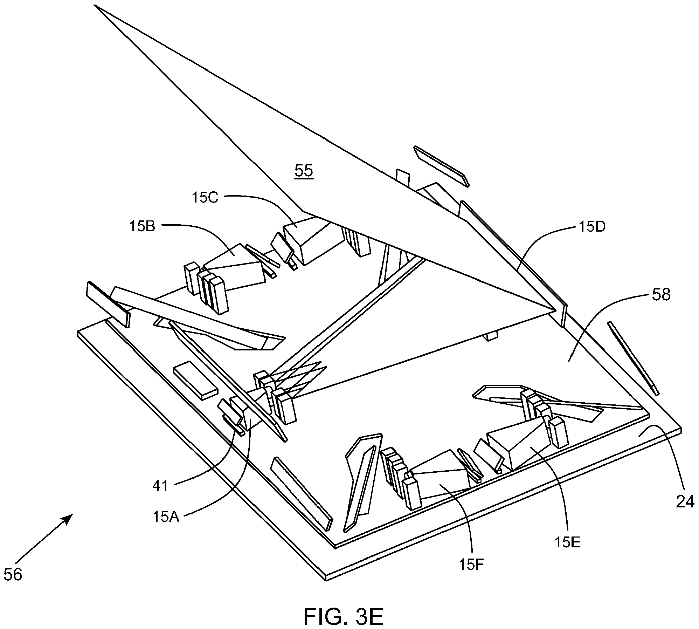

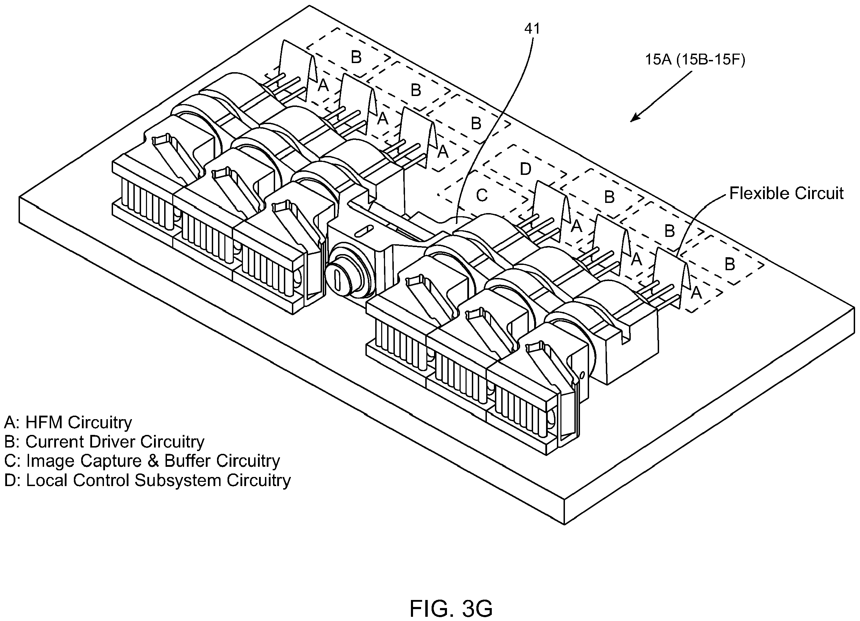

As shown Figs. 3D and 3E, a complex of the illumination and imaging stations, and FOV folding mirrors, are employed in the system shown in Figs. 3A and 3B, and each illumination and imaging station projects a single substantially composite planar illumination and imaging plane (PLIB/FOV). Each such PLIB is generated from the array of PLIMs having a dynamically/adaptively controlled ratio of visible and IR spectral energy, and employing an integrated HFM/OMUX despeckling mechanism for speckle pattern noise reduction. Fig. 3G shows the PLIIM and the placement of its HFM circuitry, current driver circuitry, image capture and buffer circuitry, and local control subsystem circuitry on the optical bench of the station.

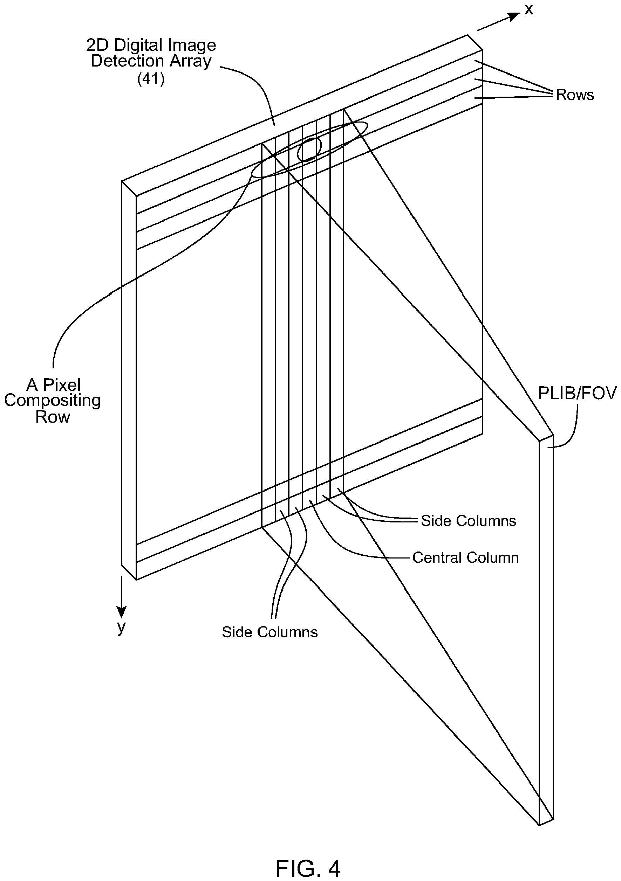

Fig. 4 shows how the FOV of the PLIIM spatially overlaps the pixel rows of multiple columns on the 2D image detection array employed in each PLIIM.

Fig. 5 describes a semi-redundant pixel sampling and compositing technique which can be employed at the pixel capture level, prior to decode processing. This process can be carried out in a transparent manner by the image capture and buffering subsystem shown in Fig. 3C or the digital image processing subsystem 20 shown in Fig. 3B, under the control of system control subsystem 37.

As indicated at Block A in Fig. 5, the image controller resets pixels in all rows and columns of the 2D image detection array deployed in the digital-imaging based system.

As Block B, when all pixels are ready to integrate photonic (i.e. light) energy, illuminate the field of view (FOV) and integrate light energy focused onto the pixels in the narrow rectangular region of interest (ROI) defined by the rows and columns that are intersected by the FOV of the 2D image detection array.

As Block C, within a narrow ROI, the image capture and buffering subsystem reads out pixel values along each row in the 2D image detection array, and buffers these pixel values in memory.

As Step D, for each buffered row of pixel values in the 2D image detection array, the image capture and buffering subsystem processes the pixels to produce a single pixel value and then places this composited pixel value in a single row location in the single-column linear (1D) digital image composited from the from the composited pixel values produced from the rows of the 2D image detection array.

In one illustrative embodiment, the pixel processing method carried out by the image capture and buffering subsystem (or digital image processing subsystem) can involve filtering (i.e. averaging) the pixel values along a given row to composite the single pixel value for the corresponding pixel row in the single-column linear digital image being composited within the narrow ROI. In a second alternative embodiment, the pixel processing method can involve interpolating pixel values to composite the single pixel value for the corresponding pixel row in the narrow ROI in order to achieve greater performance on codes tilted with respect to the PLIB. In alternative embodiments, even more complex pixel processing algorithms can be used.

By using conventional 2D image sensing arrays to capture narrow-area images, and then pixel processing these images to produce composite 1D digital images, the return PLIB in the PLIIMs employed in system 1 do not have to tightly focused on the 2D image detection array, thereby relaxing alignment difficulties, and eliminating speckle-pattern noise at the image detector, while ensuring that all of the image data is still collected for high-resolution linear digital imaging.

Using the planar laser illumination and imaging techniques disclosed herein, very minor alignment is required during the production process. For example, a 1280 x 960 pixel sensor might only require 20 of the 960 rows of pixels available in the 2D image detection array. This would make the alignment process 20 times easier than a linear sensor, but only about 2% of the total data from the 2D image sensing array would need to be processed, thereby assisting in the processing speed of the scanner.

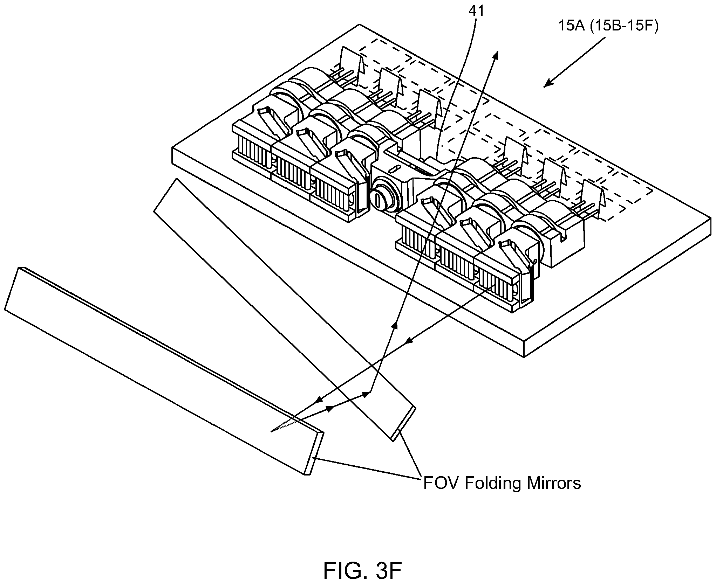

By eliminating critical alignment procedures, the multiple laser beams generated by the OMUX in the PLIIMs of Fig. 3F do not need be perfectly superimposed on each other, and thus, will illuminate a number of different pixel rows on the 2D image detection array. However, using the pixel compositing process described in Fig. 5, speckle-pattern noise elements are allowed to digitally sum up, from one pixel row to another, and thereby, averaging out pixel-pattern noise within the composited linear (1D) digital image generated by the PLIIM.

The above method works well when a PLIB illuminates a bar code symbol with virtually no tilt (i.e. the bars and spaces are perpendicular to the PLIB). However, this limit of zero tilt cannot be guaranteed in all applications. In most applications where non-zero tilt cannot be ensured, typically only a small amount of shift will be introduced into the composited linear digital image, when using the pixel compositing process described above. When code tilt is appreciable, a more complex method of pixel processing is typically recommended. The amount of tilt, which would be considered appreciable, will depend on the number of pixel rows used. The tolerable amount of tilt will be smaller as the number of pixel rows increases.

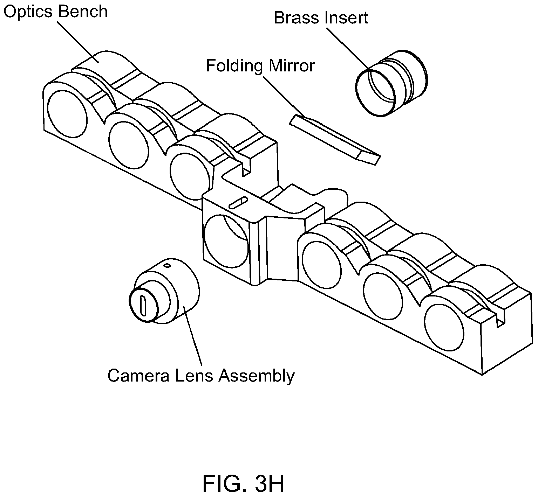

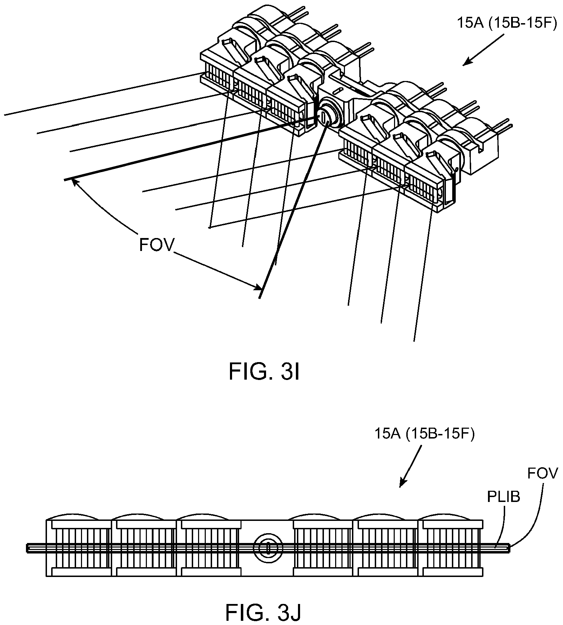

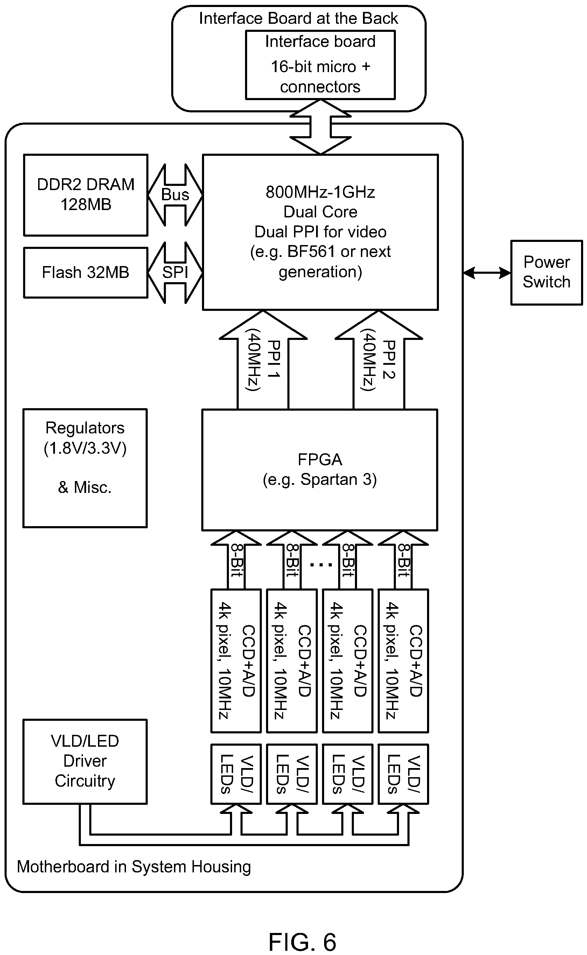

Fig. 6 describes an exemplary embodiment of a computing and memory architecture platform that can be used to implement the omni-directional image capturing and processing based bar code symbol reading system described in Figs. 3 and 3C. As shown, this hardware computing and memory platform can be realized on a single PC board 58, along with the electro-optics associated with the illumination and imaging stations and other subsystems, and therefore functioning as an optical bench as well. As shown, the hardware platform comprises: at least one, but preferably multiple high speed dual core microprocessors, to provide a multi-processor architecture having high bandwidth video-interfaces and video memory and processing support; an FPGA (e.g. Spartan 3) for managing the digital image streams supplied by the plurality of digital image capturing and buffering channels, each of which is driven by an illumination and imaging station in the system; a robust multi-tier memory architecture including DRAM, Flash Memory, SRAM and even a hard-drive persistence memory in some applications; arrays of VLDs and associated beam shaping and collimating/focusing optics; and analog and digital circuitry for realizing the illumination subsystem; interface board with microprocessors and connectors; power supply and distribution circuitry; as well as circuitry for implementing the others subsystems employed in the system.

### Second Illustrative Embodiment Of The Bar Code Symbol Reading System

In the second illustrative embodiment shown in Fig. 7, the illumination and imaging apparatus of the present disclosure is realized in the form of a tunnel-type digital image capturing and processing system 100 that can be deployed in various application environments, including but not limited to retail point of sale (POS) subsystems.

In the illustrative embodiment, the system 100 will include either a closed or partially open tunnel-like arrangement with package/object input and output ports 102A, 102B, through which a conveyor belt transport structure 124A, 124B passes, and within which a complex of coplanar illumination and imaging planes 103 are (i) automatically generated from a complex of illumination and imaging subsystems (i.e. modules) 104A through 104F mounted about the conveyor belt structure 124, and (ii) projected within a 3D imaging volume 105 defined above the conveyor belt within the spatial confines of the tunnel-like arrangement.

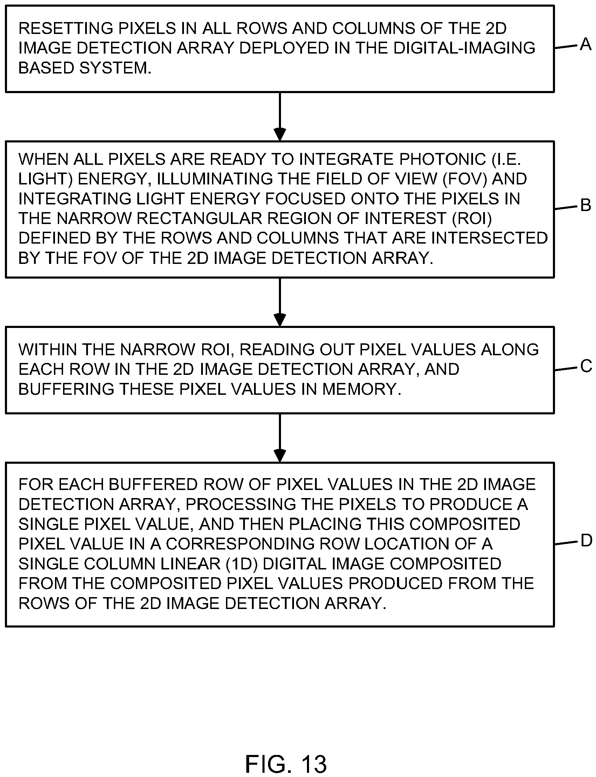

In general, the complex of illumination and imaging subsystems 104A through 104F are arranged about the conveyor belt structure subsystem 124B in the tunnel system to capture narrow-area digital images along the field of view (FOV) of its coplanar illumination and imaging planes using laser illumination techniques. Each captured digital narrow-area digital image is then buffered and processed as described in Fig. 13, to generate a linear (1D) digital image. Typically, the linear digital image is then buffered and decode-processed using linear (1D) type image capturing and processing based bar code reading algorithms, or can be assembled together to reconstruct 2D images for decode-processing using 1D/2D image processing based bar code reading techniques, as taught in Applicants' U.S. Patent No. 7,028,899 B2, incorporated herein by reference.

Referring to Fig. 7, the illustrative embodiment of the tunnel-type omni-directional digital imaging self-checkout system 100 is shown installed about a conveyor belt countertop surface at a self-checkout subsystem 106 in a retail store environment, such as a supermarket or superstore. As shown, the tunnel system 100 comprises a tunnel-like housing structure with side and top sections, providing input and output ports 102A and 102B for the transport of packages (e.g. products) and other objects being checked out at a self-checkout or cashier-assisted station 110 interfaced with the tunnel system.

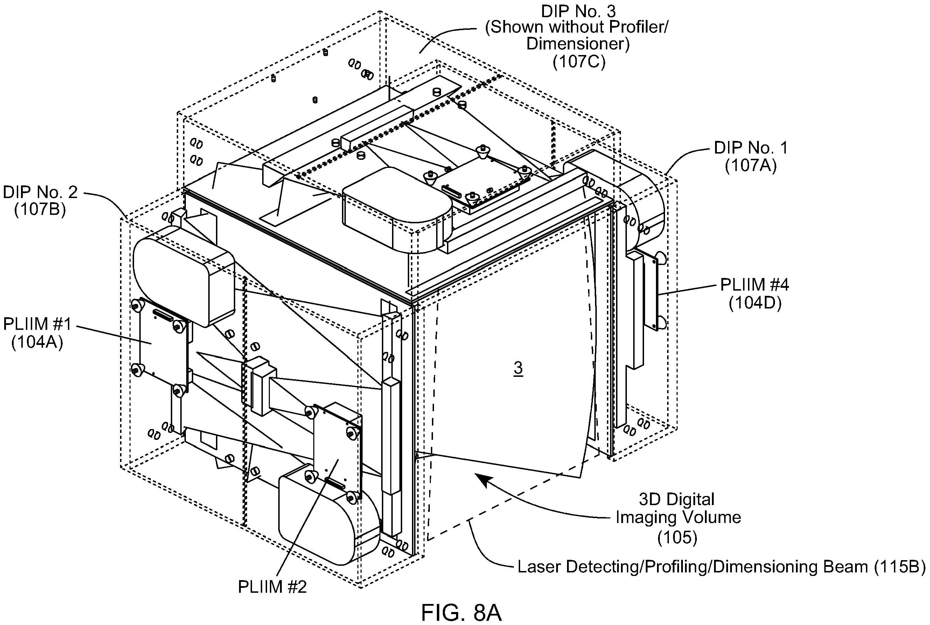

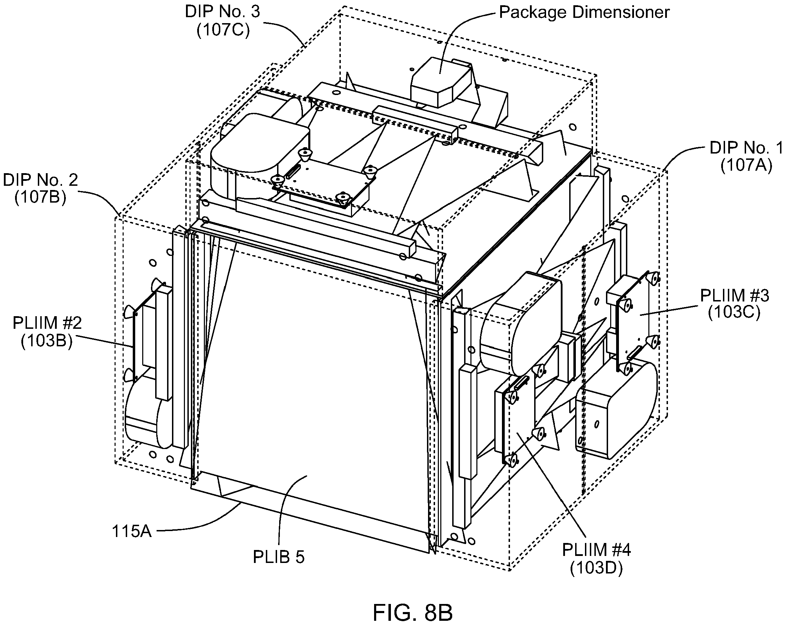

Figs. 8A and 8B shows the tunnel-type digital imaging system with its self-checkout computer system or cashier-assisted station 110 removed from the tunnel housing. As shown, the tunnel system comprises: (i) a pair of PLIIM-based digital linear imaging panels (DIPs) 107A and 107B arranged on opposite sides of the tunnel-like housing structure, and the conveyor belt structure of the first conveyor belt subsystem; (ii) one PLIIM-based digital linear imaging panel (DIP) 107C arranged on the upper side of the tunnel-like housing structure, which can be made from plastic, metal or composite material; (iii) one PLIIM-based digital linear imaging panel (DIP) 107D arranged below the second conveyor belt subsystem so that its spatially-overlapping PLIB/FOV projects through the gap region 113 and can capture linear digital images of code symbols on the underside of objects being transported through the tunnel system; and (iv) an under-conveyor electronic weighing subsystem 114 supported under the conveyor belt 112B, within the tunnel housing structure 109.

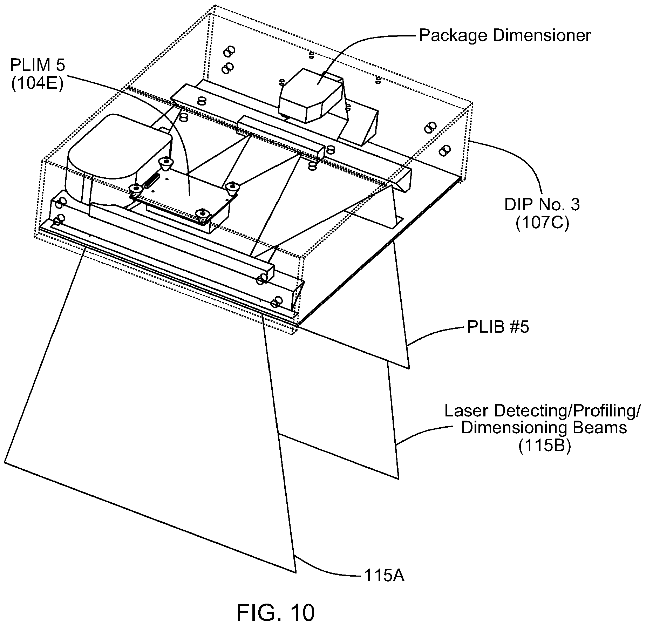

As shown in Fig. 10, the third DIP located above the conveyor belt generates and projects a first object detection/profiling/dimensioning beam 115A towards the conveyor belt surface and disposed slightly before (i.e. upstream from) the PLIB #5, that is generated by the fourth DIP 107D, beneath the second conveyor subsystem 112B and projected through the narrow gap 113 formed between the first and second conveyor belt subsystems. This allows the tunnel system to automatically detect, profile and dimension objects prior to identifying them within the tunnel system.

As shown in Fig. 10, the third DIP 107C located above the conveyor belt also generates and projects a second object detection/profiling/dimensioning beam 115B towards the conveyor belt surface at the exit port of the tunnel system. This allows the tunnel system to automatically redetect objects as they exit the tunnel system, providing additional information about the state of profiled, identified and tracked objects passing through the system, which can be used in its data element management and tracking architecture. The first and second object detection/profiling/dimensioning beams generated from the third DIP 107C can be implemented differently, as indicated in the LADAR-based subsystem of US Publication No. 20080283611A1 and the triangulation-based subsystem disclosed therein. In each different embodiment of this subsystem, object detection, profile and dimensional information are captured, but the principles of operation of each object detection/profiling/dimensioning beam are different.

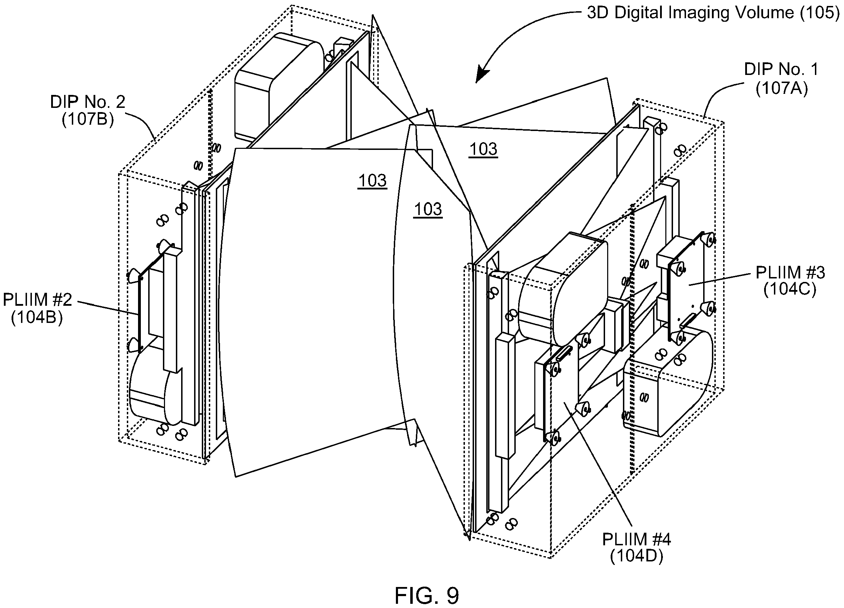

As shown in Fig. 9, each side-located PLIIM-based DIP 107A and 107B employs a pair of dual-FOV PLIIMs 104A, 104B, and 104C, 104D, which generate a pair of spatially-overlapping PLIB/FOVs that intersect within the 3D imaging volume of the tunnel system, as illustrated in Fig. 7, and generate a complex of spatially-overlapping PLIB/FOVs within the 3D digital imaging volume generated within the center of the tunnel structure.

As shown in Fig. 10, the upper PLIIM-based DIP, arranged above the conveyor belt structure, automatically generates and projects a PLIB/FOV #5 downwardly towards the conveyor surface, which captures digital linear images of objects. These digital images are then processed in an effort to read bar code symbols and other graphical indicia on the top surfaces of objects as they are transported through the tunnel system. As indicated in Figs. 10, the PLIB/FOV is arranged, at the input port, slightly behind the first laser profiling/dimensioning beam employed in the upper DIP, allowing for automatic identification of objects immediately after they are detected and profiled/dimensioned.

As shown in Figs. 11A and 11B, the system architecture of tunnel-type digital imaging system is shown comprising: the complex of illuminating and linear imaging subsystems (PLIIMs) 104A through 104F, constructed using VLD based linear illumination arrays and image sensing arrays, as described hereinabove in Applicants' WIPO Publication No. 2008/011067, incorporated herein by reference, and supported within the PLIIM-based DIPs of the tunnel system; a multi-channel multi-processor digital image processing subsystem 126 for supporting automatic image processing based bar code reading operations on digital linear image data streams generated by each spatially-overlapping illumination and imaging plane (PLIB/FOV) within the system; package detection/dimensioning/profiling subsystems 120 supported in the upper DIP; first and second conveyor-belt subsystems 112A and 112B; a conveyor-belt tachometer 127 for measurement conveyor belt speed in real-time; a software-based object recognition subsystem 128, for use in cooperation with the digital image processing subsystem 126, and automatically recognizing objects (such as vegetables and fruit) at the retail POS while being imaged by the system; electronic in-motion/under-conveyor weight scale 114 employing a matrix array of miniature piezoelectric load cell transducers 114C, positioned beneath the conveyor belt within and/or outside the tunnel system, for rapidly measuring the spatial-pressure distributions (i.e. weight) of objects positioned on the conveyor belt subsystem, and generating electronic data representative of measured weight of the object; an input/output subsystem 129 for interfacing with the image processing subsystem 126, the electronic inmotion/under-conveyor weight scale 114, an RFID reader 130, a credit-card reader 131 and Electronic Article Surveillance (EAS) Subsystem 132, including EAS tag deactivation block integrated in system housing and operable when packages are transported through the exit port of the tunnel system; a wide-area wireless interface (WIFI) 134 including RF transceiver and antenna 135 for connecting to the TCP/IP layer of the Internet as well as one or more image storing and processing RDBMS servers 136 (which can receive images lifted by system for remote processing by the image storing and processing servers 136); a BlueTooth® RF 2-way communication interface 137 including RF transceivers and antennas 138 for connecting to Bluetooth® enabled hand-held scanners, imagers, PDAs, portable computers 162 and the like, for control, management, application and diagnostic purposes; a customer/host computer system 110 interfaced with the I/O/ subsystem 129, and having an LCD visual display, a keyboard, a CPU and memory architecture, and a printer 141; a cash-coin handling subsystem 142; and a global control subsystem 150 for controlling (i.e. orchestrating and managing) the operation of the illumination and imaging subsystems, electronic weighing subsystem 114, package weighing subsystem 140, software-based data element management, tracking and correlating subsystem 160, software-based checkout subsystem 162, and all other subsystems within the self-checkout system. As shown, each illumination and imaging subsystem 114A through 114F transmits frames of image data to the image processing subsystem 126, for image processing.

During tunnel system operation, the local control subsystem (i.e. microcontroller) 175 receives object velocity data from either a conveyor belt tachometer 127 or other data source, and generates control data for optimally controlling the planar illumination arrays 171A, 171B and/or the clock frequency in the linear image sensing array 176 within the image formation and detection subsystem.

During system operations, the digital tunnel system 100 runs a system control program, wherein all PLIIMs in each illumination and imaging subsystems 104A through 104F remains essentially in its Idle Mode (i.e. does not emit illumination) until the global system control subsystem 150 receives command data from the automatic package/object detection/profiling/dimensioning subsystem 114A integrated in the upper DIP 107C, indicating that at least one object or package has entered the tunnel structure of the tunnel system. Upon the detection of this "object in tunnel" condition, the global system control subsystem sends control signals to each and every PLIIM-based illumination and imaging subsystem to generate PLIB/FOVs.

As shown in Fig. 9, each PLIIM-based illumination and imaging subsystem 104A through 104F employed in the tunnel-type digital imaging system 100 comprises: an illumination subsystem 170; a linear image formation and detection (IFD) subsystem 174; a local control subsystem 175; an image capturing and buffering subsystem 179; and an (optional) high-speed image capturing and processing based motion/velocity sensing subsystem.

The illumination subsystem 170 includes a pair of linear array of VLDs or LEDs 171A, 171B (with or without spectral mixing as taught in Applicants' WIPO Publication No. 2008/011067, incorporated by reference, and associated focusing and cylindrical beam shaping optics 172A, 172B (i.e. planar laser illumination arrays or PLIAs), for generating a planar illumination beam (PLIB) 173A, 173B from the subsystem.

The linear image formation and detection (IFD) subsystem 174 has a camera controller interface (e.g. FPGA) for interfacing with the local control subsystem (i.e. microcontroller) 175 and a high-resolution segmented, 2D (area-type) image sensing/detection array 176 with FOV forming optics 177 providing a field of view (FOV) 178 on the 2D image sensing array 176, that spatially-overlaps the PLIB produced by the linear laser illumination arrays 171A, 171B, so as to form and detect narrow-area digital images of objects within the FOV of the system. The local control subsystem 175 locally controls the operation of subcomponents within the subsystem, in response to control signals generated by global control subsystem 150 maintained at the system level.

The image capturing and buffering subsystem 179 captures narrow-area digital images with the 2D image sensing array 176 and buffers these narrow-area images in buffer memory which are then processed according to the pixel processing method described in Figs. 13 so as to generate a linear (1D) digital image of the FOV. These linear digital images can be processed directly by image-processing subsystem 126, or alternatively buffered and then composited to form 2D digital images for transfer to image-processing subsystem 126, and subsequently image processed according to bar code symbol decoding algorithms, OCR algorithms, and/or object recognition processes. Details regarding the design and construction of planar illumination and imaging module (PLIIMs) can be found in Applicants' U.S. Patent No. 7,028,899 B2 incorporated herein by reference.

Referring to Fig. 13, the pixel compositing technique employed at the pixel capture level, prior to decode processing, will now be described. This process is carried out in a transparent manner by the digital image processing subsystem 20 under the control of system control subsystem 37.

As indicated at Block A in Fig. 13, the image controller resets pixels in all rows and columns of the 2D image detection array deployed in the digital-imaging based system.

At Block B, when all pixels are ready to integrate photonic (i.e. light) energy, illuminate the field of view (FOV) and integrate light energy focused onto the pixels in the narrow rectangular region of interest (ROI) defined by the rows and columns that are intersected by the FOV of the 2D image detection array.

At Block C, within a narrow ROI, the image capture and buffering subsystem reads out pixel values along each row in the 2D image detection array, and buffers these pixel values in memory.

At Block D, for each buffered row of pixel values in the 2D image detection array, the image capture and buffering subsystem processes the pixels to produce a single pixel value and then places this composited pixel value in a single row location in the single-column linear (1D) digital image composited from the from the composited pixel values produced from the rows of the 2D image detection array.

In one illustrative embodiment, the pixel processing method carried out by the image capture and buffering subsystem (or digital image processing subsystem) can involve filtering (i.e. averaging) the pixel values along a given row to composite the single pixel value for the corresponding pixel row in the single-column linear digital image being composited within the narrow ROI. In a second alternative embodiment, the pixel processing method can involve interpolating pixel values to composite the single pixel value for the corresponding pixel row in the narrow ROI in order to achieve greater performance on codes tilted with respect to the PLIB. In alternative embodiments, even more complex pixel processing algorithms can be used.

By using conventional 2-D image sensing arrays to capture narrow-area images, and then pixel processing these images to composite 1D digital images, the return PLIB in the PLIIMs employed in system 100 do not have to tightly focused on the 2D image detection array, thereby relaxing alignment difficulties, and eliminating speckle-pattern noise at the image detector, while ensuring that all of the image data is still collected for high-resolution linear digital imaging.

Using the planar laser illumination and imaging techniques disclosed herein, very minor alignment is required during the production process. For example, a 1280 x 960 pixel sensor might require only 20 of the 960 rows of pixels available in the 2D image detection array. This would make the alignment process 20 times easier than when using a linear sensor, but only about 2% of the total data from the 2-D image sensing array would need to be processed, thereby assisting in the processing speed of the scanner.

By eliminating critical alignment procedures, the multiple laser beams generated by the OMUX in the PLIIMs of Fig. 8A do not need be perfectly superimposed on each other, and thus, will illuminate a number of different pixel rows on the 2D image detection array. However, using the pixel compositing process described in Fig. 13, speckle-pattern noise elements are allowed to digitally sum up, from one pixel row to another, and thereby, averaging out pixel-pattern noise within the composited linear (1D) digital image generated by the PLIIM.

The above method works well when a PLIB illuminates a bar code symbol with virtually no tilt (i.e. the bars and spaces are perpendicular to the PLIB). However, this limit of zero tilt cannot be guaranteed in all applications. In most applications where non-zero tilt cannot be ensured, typically only a small amount of shift will be introduced into the composited linear digital image, when using the pixel compositing process described above. When code tilt is appreciable, a more complex method of pixel processing is typically recommended. The amount of tilt, which would be considered appreciable, will depend on the number of pixel rows used. The tolerable amount of tilt will be smaller as the number of pixel rows increases.

### Third Illustrative Embodiment Of The Bar Code Symbol Reading System

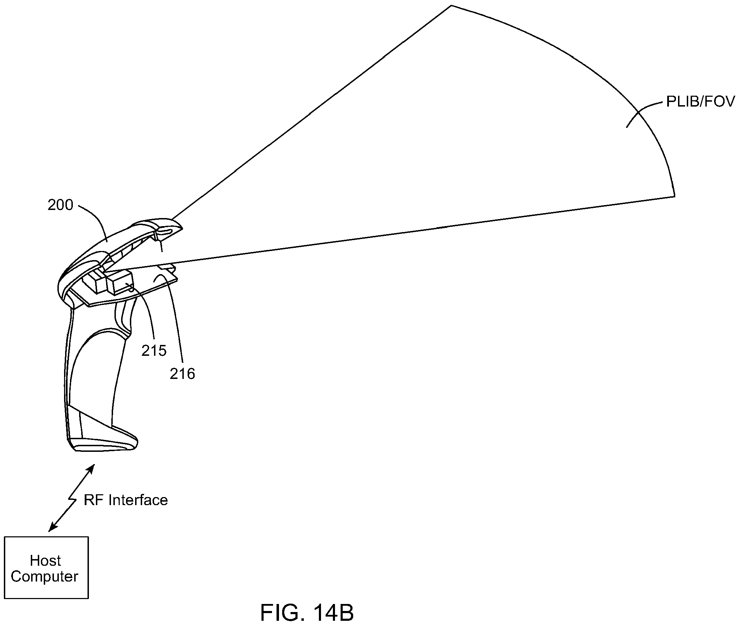

As shown in Figs. 14A and 14B, the bar code symbol reading system of the third illustrative embodiment 200 includes a hand-supportable housing having an optically transparent (glass) imaging window which permits the projection of coplanar illumination and imaging plane (PLIB/FOV) from a laser illumination and imaging station mounted on an optical bench 216, supporting a planar illumination and imaging module (PLIIM) 215.

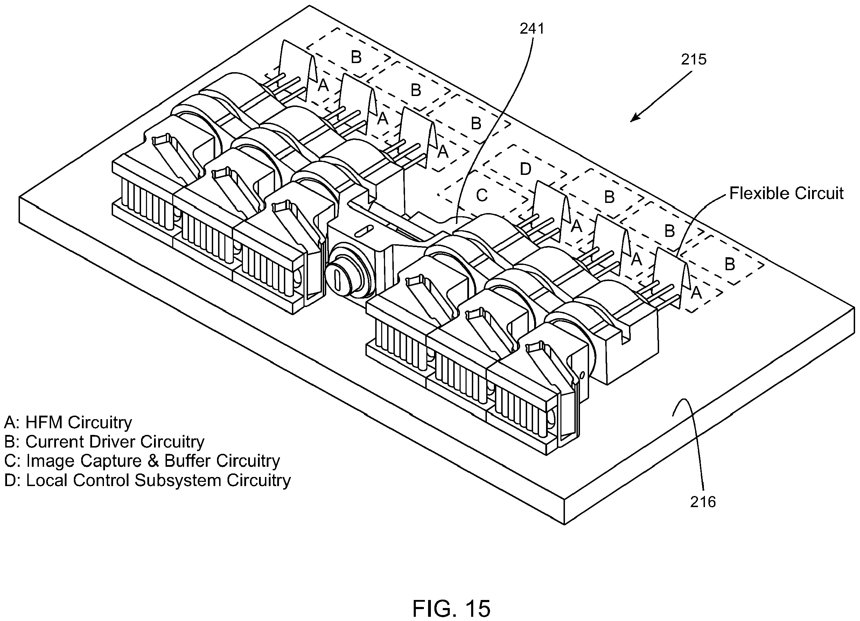

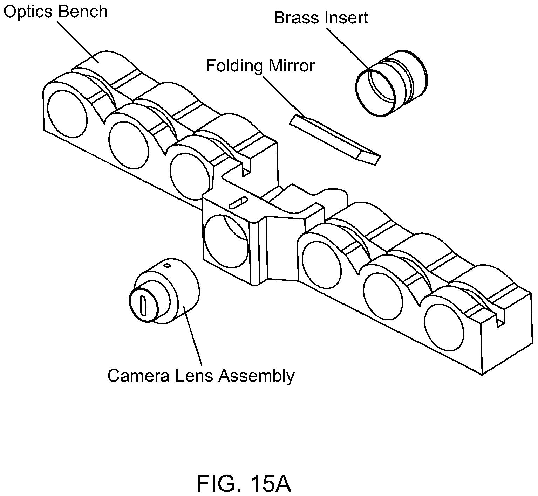

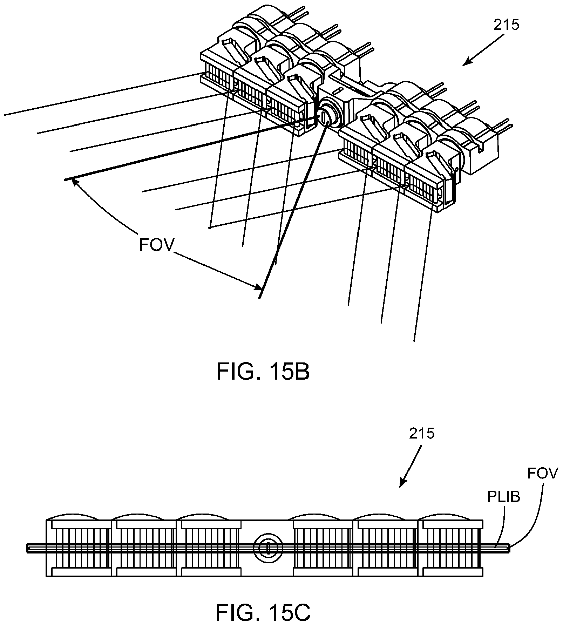

As shown in Figs. 15 through 15C, the PLIIM 215 projects a single substantially composite planar illumination and imaging plane (PLIB/FOV) from its module. As shown, a composite PLIB is generated from an array of planar illumination modules (PLIMs) having a dynamically/adaptively controlled ratio of visible and IR spectral energy, and employing an integrated HFM/OMUX despeckling mechanism for speckle pattern noise reduction. Fig. 3G shows the PLIIM and the placement of its HFM circuitry, current driver circuitry, image capture and buffer circuitry and local control subsystem circuitry on the optical bench of the station.

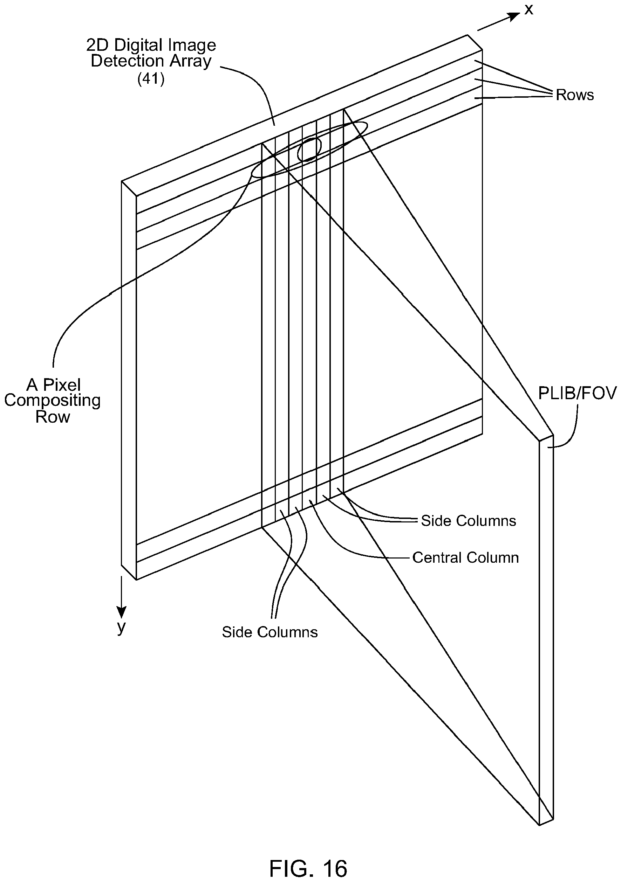

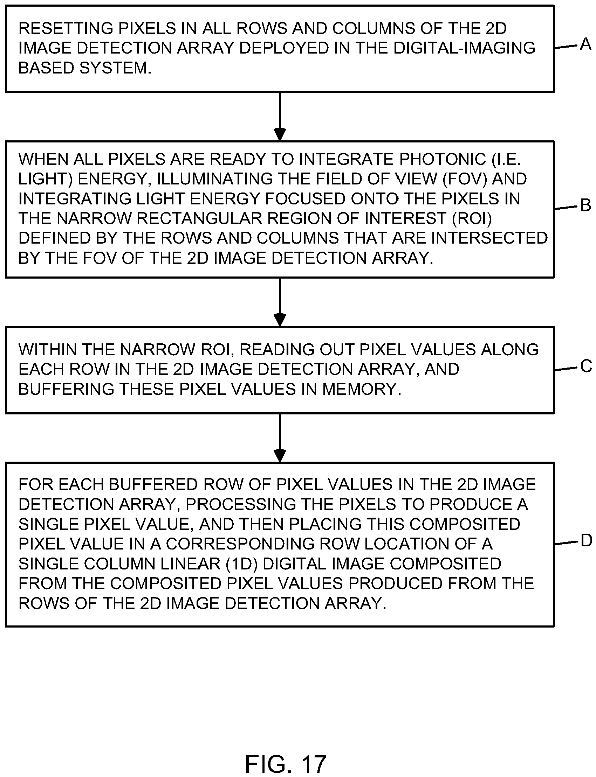

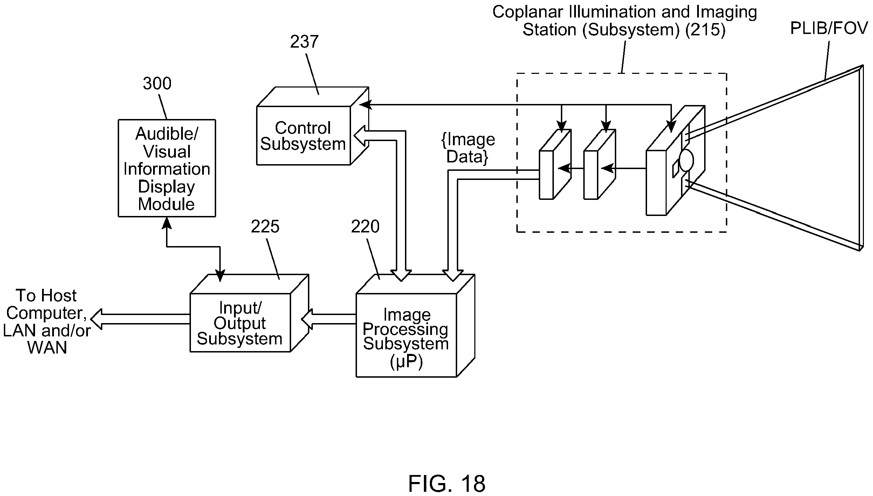

Fig. 16 shows how the FOV of the PLIIM 215 spatially overlaps the pixel rows of multiple columns on the 2D image detection array 241 employed in the PLIIM 215. The flow chart in Fig. 17 describes the pixel processing algorithm that is carried out in real-time within the image capture and buffering subsystem 242 shown in the system diagram of Fig. 18.

As shown in Fig. 18, the system 200 generally comprises: an illuminating and linear imaging station 215 constructed from a planar illumination and imaging module (PLIIM) using linear VLD-based illumination arrays, and area-type (2D) image detection arrays and pixel processing technology of the present disclosure, illustrated in Figs. 16 and 17; an image processing subsystem 220 for supporting automatic image processing based bar code symbol reading and optical character recognition (OCR) along its coplanar illumination and imaging plane; an input/output subsystem 225 for interfacing with a host computer subsystem via a wireless or wired data communication interface; and an audible/visual information display subsystem (i.e. module) 300 for visually and/or audibly displaying information relating to the operation of the system.

The primary function of the illumination and imaging station 215 is to capture narrow-area digital images along the field of view (FOV) of its coplanar illumination and imaging planes using laser illumination, depending on the system design. These captured narrow-area (2D) digital images are then buffered, and preprocessed to generate linear (1D) digital images using the pixel processing method shown in Fig. 17. The linear digital images are then decode-processed using linear (1D) type image capturing and processing based bar code reading algorithms, or can be assembled together and buffered to reconstruct 2D images for decode-processing using 1D/2D image processing based bar code reading techniques, as taught in Applicants' U.S. Patent No. 7,028,899 B2, incorporated herein by reference.

In Fig. 18, the image processing subsystem 220 includes a bar code symbol reading module which can be realized using SwiftDecoder® Image Processing Based Bar Code Reading Software from Omniplanar Corporation, New Jersey, or any other suitable image processing based bar code reading software. Also, the system provides full support for (i) dynamically and adaptively controlling system control parameters in the digital image capture and processing system, as disclosed and taught in Applicants' US Patent Nos. 7,607,581 and 7,464,877 as well as (ii) permitting modification and/or extension of system features and function, as disclosed and taught in US Patent No. 7,708,205, each said patent being incorporated herein by reference.

As shown in Fig. 15, the coplanar illumination and imaging station 215 comprises: an illumination subsystem including a linear array of VLDs and associated focusing and cylindrical beam shaping optics (i.e. planar illumination arrays PLIAs), for generating a planar laser illumination beam (PLIB) 1 from the station; a image formation and detection (IFD) subsystem having a camera controller interface (e.g. realized as a field programmable gate array or FPGA), and a high-resolution area-type (2D) image sensing array 241 with optics providing a field of view (FOV) on the 2D image sensing array 241 that spatially-overlaps the PLIB produced by the linear illumination array 245; a control subsystem 237 for controlling the operation of subcomponents within the station; and an image capturing and buffering subsystem 242 for capturing narrow-area digital images with the 2D image sensing array 241, buffering these narrow area images in buffer memory, and processing these images as taught in Fig. 17 so as to form linear (1D) digital images, which can be subsequently buffered and combined to form 2D digital images for transfer to image-processing subsystem 220 maintained at the system level, as shown in Fig. 18, and subsequent image processing according to bar code symbol decoding algorithms, OCR algorithms, and/or object recognition processes. Details regarding the design and construction of planar illumination and imaging module (PLIIMs) can be found in Applicants' U.S. Patent No. 7,028,899 B2, incorporated herein by reference.

Fig. 17 describes the pixel compositing technique employed at the pixel capture level, prior to decode processing. This process is carried out in a transparent manner by the digital image processing subsystem 220 under the control of system control subsystem 237.

As indicated at Block A in Fig. 17, the image controller resets pixels in all rows and columns of the 2D image detection array 241 deployed in the digital-imaging based system.

As Block B, when all pixels are ready to integrate photonic (i.e. light) energy, illuminate the field of view (FOV) and integrate light energy focused onto the pixels in the narrow rectangular region of interest (ROI) defined by the rows and columns that are intersected by the FOV of the 2D image detection array.

As Block C, within a narrow ROI, the image capture and buffering subsystem reads out pixel values along each row in the 2D image detection array, and buffers these pixel values in memory.

As Step D, for each buffered row of pixel values in the 2D image detection array, the image capture and buffering subsystem processes the pixels to produce a single pixel value and then places this composited pixel value in a single row location in the single-column linear (1D) digital image composited from the from the composited pixel values produced from the rows of the 2D image detection array.

In one illustrative embodiment, the pixel processing method carried out by the image capture and buffering subsystem (or digital image processing subsystem) can involve filtering (i.e. averaging) the pixel values along a given row to composite the single pixel value for the corresponding pixel row in the single-column linear digital image being composited within the narrow ROI. In a second alternative embodiment, the pixel processing method can involve interpolating pixel values to composite the single pixel value for the corresponding pixel row in the narrow ROI in order to achieve greater performance on codes tilted with respect to the PLIB. In alternative embodiments, even more complex pixel processing algorithms can be used.

By using conventional 2-D image sensing arrays to capture narrow-area images, and then pixel processing these images to composite 1D digital images, the return PLIB in the PLIIMs employed in system 1 do not have to be tightly focused on the 2D image detection array, thereby relaxing alignment difficulties, and eliminating speckle-pattern noise at the image detector, while ensuring that all of the image data is still collected for high-resolution linear digital imaging.

Using the planar laser illumination and imaging techniques disclosed herein, very minor alignment is required during the production process. For example, a 1280 x 960 pixel sensor might only require 20 of the 960 rows of pixels available in the 2D image detection array. This would make the alignment process 20 times easier than a linear sensor, but only about 2% of the total data from the 2-D image sensing array would need to be processed, thereby assisting in the processing speed of the scanner.

By eliminating critical alignment procedures, the multiple laser beams generated by the OMUX in the PLIIMs of Fig. 15 do not need be perfectly superimposed on each other, and thus, will illuminate a number of different pixel rows on the 2D image detection array. However, using the pixel compositing process described in Fig. 5, speckle-pattern noise elements are allowed to digitally sum up, from one pixel row to another, and thereby, averaging out pixel-pattern noise within the composited linear (1D) digital image generated by the PLIIM.

The above method works well when a PLIB illuminates a bar code symbol with virtually no tilt (i.e. the bars and spaces are perpendicular to the PLIB). However, this limit of zero tilt cannot be guaranteed in all applications. In most applications where non-zero tilt cannot be ensured, typically only a small amount of shift will be introduced into the composited linear digital image, when using the pixel compositing process described above. When code tilt is appreciable, a more complex method of pixel processing is typically recommended. The amount of tilt, which would be considered appreciable, will depend on the number of pixel rows used. The tolerable amount of tilt will be smaller as the number of pixel rows increases.

Several modifications to the illustrative embodiments have been described above. It is understood, however, that various other modifications to the illustrative embodiment will readily occur to persons with ordinary skill in the art. All such modifications and variations are deemed to be within the scope of the accompanying Claims.

## Claims

1. A digital-imaging based code symbol reading system comprising:
a housing having a light transmission aperture;
an image formation and detection subsystem, disposed in said housing, having image formation optics for producing and projecting a field of view (FOV) through said light transmission aperture and onto an 2D image detection array for detecting narrow-area 2D digital images of any objects present within said FOV during object illumination and imaging operations;
an illumination subsystem, disposed in said housing, including a planar illumination array for producing planar illumination beam (PLIB) within said FOV, and illuminating said any objects present in said FOV, so that said PLIB reflects off said any objects and is transmitted back through said light transmission aperture and onto said 2D image detection array so to form a narrow-area 2D digital image of said any objects;
wherein said narrow-area 2D digital image consists of an array of pixels formed on said 2D image detection array;
an image capturing and buffering subsystem, disposed in said housing, for capturing and buffering said narrow-area 2D digital image detected by said image formation and detection subsystem,
wherein said image capturing and buffering subsystem processes the pixels of said narrow-area 2D digital image so as to composite a linear (1D) digital image; and
a digital image processing subsystem, disposed in said housing, for processing said linear (1D) digital image in order to read a code symbol graphically represented in said linear digital image and generating symbol character data representative of said read code symbol.

2. The digital-imaging based code symbol reading system of Claim 1, wherein said planar illumination array comprises one or more of an array of visible laser diodes (VLDs) and/or an array of light emitting diodes (LEDs), for producing said PLIB within said FOV.

3. The digital-imaging based code symbol reading system of Claim 1, which further comprises a trigger signal generation subsystem selected from the group consisting of: an automatic object detection subsystem, disposed in said housing, for automatically detecting the presence of said any objects within said FOV, and generating a trigger signal which initiates object illumination and imaging operations; and a manually-actuatable trigger switch is integrated within said hand-supportable housing, for automatically initiating the detection of said any objects within said FOV, and generating a trigger signal which initiates object illumination and imaging operations.

4. The digital-imaging based code symbol reading system of Claim 1, wherein said digital image processing subsystem composites 2D digital images from a sequence of linear digital images captured from said any objects, and then processes said 2D digital images in order to read 1D and/or 2D code symbols graphically represented in said 2D digital image.

5. The digital-imaging based code symbol reading system of Claim 7, wherein each said 1D and/or 2D code symbol is a bar code symbol selected from the group consisting of 1D bar code symbologies and 2D bar code symbologies.

6. The digital-imaging based code symbol reading system of Claim 1, which is realized in the form of a digital imaging-based tunnel system, or a point of sale (POS) based digital imaging system.

7. A digital-imaging based code symbol reading system comprising:
a housing having a light transmission aperture;
an image formation and detection subsystem, disposed in said housing, having image formation optics for producing and projecting a field of view (FOV) through said light transmission aperture and onto a 2D image detection array for detecting narrow-area 2D digital images of any objects within said FOV during object illumination and imaging operations;
an illumination subsystem, disposed in said housing, including a planar illumination array for producing planar illumination beam (PLIB) within said FOV, and illuminating said object detected in said FOV, so that said PLIB reflects off said any objects and is transmitted back through said light transmission aperture and onto said 2D image detection array so to form a narrow-area 2D digital image of said any objects;
wherein said narrow-area 2D digital image consists of an array of pixels formed on said 2D image detection array;
an image capturing and buffering subsystem, disposed in said housing, for capturing and buffering said narrow-area 2D digital image detected by said image formation and detection subsystem; and
a digital image processing subsystem, disposed in said housing, for (i) processing the pixels of said narrow-area 2D digital image so as to composite a linear (1D) image, and also (ii) processing said linear (1D) digital image in order to read a code symbol graphically represented in said linear digital image and generating symbol character data representative of said read code symbol.

8. The digital-imaging based code symbol reading system of Claim 7, wherein said planar illumination array comprises one or more of an array of visible laser diodes (VLDs) and/or an array of light emitting diodes (LEDs), for producing said PLIB within said FOV.

9. The digital-imaging based code symbol reading system of Claim 7, which further comprises a trigger signal generation subsystem selected from the group consisting of: an automatic object detection subsystem, disposed in said housing, for automatically detecting the presence of said any objects within said FOV, and generating a trigger signal which initiates object illumination and imaging operations; and a manually-actuatable trigger switch is integrated within said hand-supportable housing, for automatically initiating the detection of said any objects within said FOV, and generating a trigger signal which initiates object illumination and imaging operations.

10. A planar illumination and imaging module (PLIIM) for producing linear (1D) digital images, comprising:
an image formation and detection subsystem having image formation optics for producing and projecting a field of view (FOV) onto a 2D image detection array forming narrow-area 2D digital images of any objects within said FOV, during object illumination and imaging operations;
an illumination subsystem including a planar illumination array for producing planar illumination beam (PLIB) within said FOV, and illuminating said object detected in said FOV, so that said PLIB reflects off said any objects and is transmitted back through said light transmission aperture and onto said 2D image detection array so to form a narrow-area 2D digital image of said any objects;
wherein said narrow-area 2D digital image consists of an array of pixels formed on said 2D image detection array; and
an image capturing and buffering subsystem for (i) capturing and buffering said narrow-area 2D digital image detected by said image formation and detection subsystem, and (ii) processing the pixels of said narrow-area 2D digital image so as to composite a linear (1D) digital image of said any objects present in said FOV.

11. A method of producing digital linear images, comprising the steps of:
(a) providing a digital imaging system having a 2D image detection array with rows and columns within a field of view (FOV), and an illumination source for producing a planar or narrow illumination beam within said FOV;
(b) using said illumination source to illuminate said FOV and any objects present therein, while using said 2D image detection array so as to detect one or more narrow-area 2D digital image of said any objects on said 2D image detection array; and
(c) processing the pixels of each said narrow-area 2D digital image so as to composite a linear (1D) digital image of said any objects present in said FOV, and consisting of a single column of pixels.

12. The method of claim 11, wherein step (c) comprises processing the pixels of said narrow-area 2D digital image so as to determine tilt, if any, present between the orientation of said FOV and the orientation of said any objects being imaged, and then using the determined tilt to generate said composite said linear digital image.

13. The method of claim 11, which further comprises:
(d) decode-processing said digital linear image so as to read one or more code symbols.

14. The method of claim 11, which is carried out in a digital imaging-based tunnel system, or a point of sale (POS) based digital imaging system.
